# EUROPÄISCHE PATENTSCHRIFT

(11) **EP 1 495 678 B1**
(45) Veröffentlichungstag und Bekanntmachung des Hinweises auf die Patenterteilung: **20.02.2008**
(21) Anmeldenummer: 04015744.8
(22) Anmeldetag: 05.07.2004
(51) Int. Cl.: A22B 3/00

(54) **Schlachtgas**
Gas for slaughterhouse
Gaz pour un abattoir

(30) Priorität: 07.07.2003 DE 10330737
(43) Veröffentlichungstag der Anmeldung: 12.01.2005
(73) Patentinhaber: Messer Group GmbH, 65843 Sulzbach (DE)
(72) Erfinder: Hennequin, James, 77410 Annet sur Marne (FR)

(56) Entgegenhaltungen:
- EP-A- 0 664 957
- WO-A-94/27425
- US-A- 2 526 037
- US-A- 3 230 577
- US-B1- 6 174 228

## Beschreibung

Die Erfindung betrifft ein sauerstofffreies Gasgemisch zum Schlachten von Tieren.

Schweine werden zum Schlachten z.B. in reiner Kohlendioxid-Atmosphäre getötet. Bevor die Schweine in der Kohlendioxid-Atmosphäre das Bewusstsein verlieren, werden die Tiere zum Teil wild.

In der WO-A-94/27425 wird ein Verfahren zum Schlachten von Geflügel beschrieben, bei dem die Tiere vor ihrer Tötung mit einem Gas behandelt werden, das eine anästhetische und/oder giftige Wirkung auf die Tiere ausübt. Dabei werden die Tiere in Transportbehältern durch eine mit dem entsprechenden Gas befüllte Kammer transportiert. Je nach der Geschwindigkeit, mit der der Behälter durch die gasgefüllte Kammer gefördert wird, werden die Tiere betäubt oder auf humane Weise getötet.

Der Erfindung liegt die Aufgabe zugrunde, ein alternatives Gas oder Gasgemisch für das Schlachten von Tieren bereitzustellen.

Gegenstand der Erfindung ist ein Gasgemisch zum Schlachten von Tieren (Schlachtgas) mit den in Anspruch 1 beschriebenen Merkmalen.

Das Gasgemisch zum Schlachten von Tieren oder Schlachtgas ist ein Gas oder Gasgemisch, das neben Kohlendioxid ein Betäubungsgas und ein Inertgas enthält. Vorzugsweise ist das Betäubungsgas in sedierend, hypnotisch oder anästhetisch wirksamer Menge oder Konzentration enthalten.

Sedierung bedeutet Beruhigung. Eine hypnotische Wirkung ist eine Wirkung wie bei einem Schlafmittel. Eine anästhetisch wirksame oder wirkende Menge des Betäubungsgases führt zu einer Anästhesie oder Narkose.

Als Betäubungsgas werden vorteilhaft Anästhesiegase, insbesondere Inhalationsnarkotika eingesetzt.

Das Schlachtgas wird inhalativ (als Atemgas) dem Schlachttier verabreicht, wobei das Schlachtgas keinen Sauerstoff enthält.

Sauerstofffreie Schlachtgase werden vorteilhaft zur Tötung der Schlachttiere eingesetzt. Das sauerstofffreie Schlachtgas enthält vorzugsweise das Betäubungsgas in anästhetisch wirkender Menge oder Konzentration. Hier werden die Tiere beim Einatmen des Schlachtgases betäubt, bevor die Tiere durch Sauerstoffentzug sterben.

Das Schlachtgas wird bei Tieren wie Säugetieren (z.B. Schweine, Rinder, Schafe), Vögeln (z.B. Geflügel wie Hühner, Puten, Enten, Gänse) oder Fischen beim Schlachten verwendet. Das Schlachtgas wird insbesondere zum Töten der Tiere beim Schlachten verwendet. Das Schlachtgas wird besonders vorteilhaft beim Schlachten von Schweinen verwendet.

Das Betäubungsgas ist vorzugsweise ein Anästhesiemittel oder Narkosemittel, insbesondere ein Inhalationsnarkotikum. Inhalationsnarkotika werden in "Ullmanns Enzyklpädie der Technischen Chemie, Band 17, Stichwort: Narkosemittel, 4. Auflage, Verlag Chemie, Weinheim 1981, Seite 135-141; insbesondere Abschnitt 2, Inhalationsnarkotika, Seite 136-137" beschrieben, worauf hiermit Bezug genommen wird. Anästhesiemittel, insbesondere Inhalationsnarkotika sind z.B. Lachgas (N₂O), Kohlenwasserstoffe, Halogenkohlenwasserstoffe, Äther, halogenierte Äther, Xenon oder volatile Anästhesiemittel wie Methoxyfluran, Halothan, Enfluran, Isofluran, Sevofluran oder Desfluran. Vorzugsweise werden Lachgas (N₂O) oder Lachgas enthaltende Gasgemische als Betäubungsgas in dem Schlachtgas oder direkt als Schlachtgas beim Schlachten von Tieren eingesetzt. Das Schlachtgas besteht beispielsweise aus einem Lachgas enthaltenden Gasgemisch. Als Betäubungsgas wird vorteilhaft Lachgas mit einem weiteren Betäubungsgas, z.B. einem volatilen Anästhesiemittel, verwendet.

Das Schlachtgas enthält 1 bis 30 Volumenprozent Kohlendioxid (CO₂), vorzugsweise 5 bis 25 Volumenprozent Kohlendioxid, insbesondere 5 bis 20 Volumenprozent Kohlendioxid. Durch das Kohlendioxid werden die Tiere zum Atmen angeregt, wodurch die Wirkung des Schlachtgases verstärkt wird.

Das Schlachtgas enthält ein inertes Gas wie Stickstoff oder Edelgas, insbesondere Argon.

Das bevorzugte sauerstofffreie Schlachtgas besteht aus aus Lachgas, einem inerten Gas und Kohlendioxid. Gasgemische für das Schlachten bestehen beispielsweise aus 60 Vol.-% Lachgas/30 Vol.-% Kohlendioxid/Rest Stickstoff, 65 Vol.-% Lachgas/25 Vol.% Kohlendioxid/Rest Stickstoff, 60 Vol.-% Lachgas/25 Vol.-% Kohlendioxid/Rest Stickstoff, 60 Vol.-% Lachgas/20 Vol.-% Kohlendioxid/Rest Stickstoff, 60 Vol.-% Lachgas/10 Vol.-% Kohlendioxid/Rest Stickstoff, 35 Vol.-% Lachgas/30 Vol.-% Kohlendioxid/Rest Stickstoff, 40 Vol.-% Lachgas/20 Vol.-% Kohlendioxid/Rest Stickstoff, 45 Vol.-% Lachgas/25 Vol.% Kohlendioxid/Rest Stickstoff, 5 Vol.% Lachgas/30 Vol.% Kohlendioxid/Rest Stickstoff, 10 Vol.-% Lachgas/25 Vol.-% Kohlendioxid/Rest Stickstoff, 15 Vol.-% Lachgas/25 Vol.-% Kohlendioxid/Rest Stickstoff, 20 Vol.-% Lachgas/25 Vol.-% Kohlendioxid/Rest Stickstoff, 25 Vol.-% Lachgas/21 Vol.% Kohlendioxid/Rest Stickstoff, 30 Vol.-% Lachgas/25 Vol.-% Kohlendioxid/Rest Stickstoff, 35 Vol.-% Lachgas/20 Vol.-% Kohlendioxid/Rest Stickstoff, 40 Vol.-% Lachgas/10 Vol.-% Kohlendioxid/Rest Stickstoff, 45 Vol.% Lachgas/10 Vol.-% Kohlendioxid/Rest Stickstoff, 5 Vol.-% Lachgas/25 Vol.-% Kohlendioxid/Rest Stickstoff, 10 Vol.-% Lachgas/25 Vol.-% Kohlendioxid/Rest Stickstoff, 15 Vol.-% Lachgas/25 Vol.-% Kohlendioxid/Rest Stickstoff, 20 Vol.-% Lachgas/25 Vol.-% Kohlendioxid/Rest Stickstoff, 25 Vol.-% Lachgas/25 Vol.-% Kohlendioxid/Rest Stickstoff, 30 Vol.-% Lachgas/25 Vol.-% Kohlendioxid/Rest Stickstoff, 35 Vol.-% Lachgas/25 Vol.-% Kohlendioxid/Rest Stickstoff, 40 Vol.-% Lachgas/15 Vol.-% Kohlendioxid/Rest Stickstoff oder 45 Vol.-% Lachgas/5 Vol.-% Kohlendioxid/Rest Stickstoff.

Im einfachsten Fall wird das Schlachtgas verabreicht durch Verbringen des Tieres in eine Atmosphäre, die aus Schlachtgas besteht oder das Schlachtgas in hoher Konzentration enthält. Desweiteren kann das Schlachtgas durch eine Atemmaske oder durch Intubieren verabreicht werden.

Ein weiterer Gegenstand der Erfindung ist ein Verfahren, bei dem dem zu schlachtenden Tier ein Betäubungsgas und Kohlendioxid enthaltendes Gas oder Gasgemisch, insbesondere das Schlachtgas, verabreicht wird. Das Betäubungsgas haltige Gas oder Gasgemisch wirkt dabei insbesondere sedierend, hypnotisch oder narkotisch.

Ein weiterer Gegenstand der Erfindung ist die Verwendung eines Betäubungsgas haltigen Gases oder Gasgemisches bei der Schlachtung von Tieren, insbesondere zur Beruhigung, zur Schlaf-Einleitung und/oder Schlaf-Aufrechterhaltung oder zur Betäubung vor der Tötung der Tiere. Das das Betäubungsgas haltige Gas oder Gasgemisch dient vorteilhaft zusätzlich zur Tötung der zu schlachtenden Tiere.

Das Schlachtgas und insbesondere das Betäubungsgas werden im allgemeinen als komprimiertes Gas in Druckgasbehältern wie Druckgasflaschen oder Druckdosen bereitgestellt. Das Gas oder die Gasgemische können auch in einem Behälter als verflüssigtes Gas oder Gasgemisch oder in kälteverfestigter Form bereitgestellt werden.

Das Schlachtgas wird vorteilhaft auch vorort durch Mischen der Bestandteile erzeugt. Zur Erzeugung des Schlachtgases werden beispielsweise Gasdosiergeräte eingesetzt.

Das Schlachtgas wird als trockenes, feuchtes Gas oder wasserdampfgesättigtes Gas verwendet.

## Patentansprüche

1. Sauerstofffreies Gasgemisch zum Schlachten von Tieren, **dadurch gekennzeichnet, daß** es ein Betäubungsgas, insbesondere Inhalationsanästhetikum, und einen Anteil von 1 bis 30% Vol.-Kohlendioxid, Rest Betäubungsgas und Inertgas enthält.

2. Gasgemisch nach Anspruch 1, **dadurch gekennzeichnet, dass** das Betäubungsgas in einer Konzentration im Bereich von 5 bis 80 Vol.-%, insbesondere im Bereich von 5 bis 60 Vol.-%, enthalten ist.

3. Gasgemisch nach einem der Ansprüche 1 bis 3, **dadurch gekennzeichnet, dass** das Betäubungsgas Lachgas und/oder ein volatiles Anästhesiemittel ist.

4. Gasgemisch nach einem der vorhergehenden Ansprüche, **dadurch gekennzeichnet, dass** das Inertgas Stickstoff oder ein Edelgas, insbesondere Argon, ist.

5. Verfahren zum Schlachten von Tieren, wobei dem zu schlachtenden Tier ein betäubungsgashaltiges und kohlendioxidhaltiges Gasgemisch nach einem der Ansprüche 1 bis 4, insbesondere zur Beruhigung, zur Schlafeinleitung und/oder Aufrechterhaltung oder zur Betäubung vor der Tötung der Tiere verabreicht wird, wobei das betäubungsgashaltige Gasgemisch auch zur Tötung der Tiere führt.

6. Verfahren nach Anspruch 5, **dadurch gekennzeichnet, dass** das betäubungsgashaltige Gas bei der Schlachtung von Säugetieren, Vögeln oder Fischen eingesetzt wird.

## Claims

1. Oxygen-free gas mixture for slaughtering livestock, **characterized in that** it comprises an anaesthetic gas, in particular inhalation anaesthetic, and a proportion of from 1 to 30% by volume of carbon dioxide, remainder anaesthetic gas and inert gas.

2. Gas mixture according to Claim 1, **characterized in that** the anaesthetic gas is present in a concentration in the range from 5 to 80% by volume, in particular in the range from 5 to 60% by volume.

3. Gas mixture according to any of Claims 1 to 3, **characterized in that** the anaesthetic gas is nitrous oxide and/or a volatile anaesthetic agent.

4. Gas mixture according to any of the preceding claims, **characterized in that** the inert gas is nitrogen or a noble gas, in particular argon.

5. Method for slaughtering livestock, where an anaesthetic gas-containing and carbon dioxide-containing gas mixture according to any of Claims 1 to 4 is administered to the animal to be slaughtered, in particular for sedation, for induction of sleep and/or maintenance or for anaesthesia before killing the livestock, where the anaesthetic gas-containing gas mixture also leads to the killing of the livestock.

6. Method according to Claim 5, **characterized in that** the anaesthetic gas-containing gas is employed in the slaughter of mammals, birds or fishes.

## Revendications

1. Mélange de gaz exempt d'oxygène pour l'abattage d'animaux, **caractérisé en ce qu'**il contient un gaz d'étourdissement, notamment un anesthésique inhalable et une proportion de 1 à 30% en volume de dioxyde de carbone, le reste étant du gaz d'étourdissement et un gaz inerte.

2. Mélange de gaz selon la revendication 1, **caractérisé en ce que** le gaz d'étourdissement est contenu dans une concentration de 5 à 80% en volume, notamment de 5 à 60% en volume.

3. Mélange de gaz selon l'une quelconque des revendications 1 à 3, **caractérisé en ce que** le gaz d'étourdissement est du gaz hilarant et/ou un agent anesthésiant volatil.

4. Mélange de gaz selon l'une quelconque des revendications précédentes, **caractérisé en ce que** le gaz inerte est de l'azote ou un gaz noble, notamment de l'argon.

5. Procédé pour l'abattage d'animaux, dans lequel on administre à l'animal à abattre un mélange de gaz contenant un gaz d'étourdissement et du dioxyde de carbone selon l'une quelconque des revendications 1 à 4, notamment pour les tranquilliser, pour induire le sommeil, et/ou pour maintenir ou pour étourdir les animaux avant leur abattage, le mélange de gaz contenant du gaz d'étourdissement entraînant aussi la mort des animaux.

6. Procédé selon la revendication 5, **caractérisé en ce que** le gaz contenant du gaz d'étourdissement est utilisé pour l'abattage de mammifères, d'oiseaux ou de poissons.
